# EUROPEAN PATENT APPLICATION

(11) **EP 4 790 785 A1**
(43) Date of publication of application: **12.08.2026**
(21) Application number: 26153534.8
(22) Date of filing: 22.01.2026
(51) Int. Cl.: H01M 10/058, H01M 50/169, H01M 50/176, H01M 50/528, H01M 50/533, H01M 50/538, H01M 50/54, H01M 50/566

(54) **LASER WELDING METHOD AND POWER STORAGE DEVICE MANUFACTURING METHOD**

(30) Priority: 06.02.2025 JP 2025017985
(71) Applicant: Prime Planet Energy & Solutions, Inc., Chuo-ku, Tokyo 103-0022 (JP)
(72) Inventor: MIKI, Satoshi, Tokyo,, 103-0022 (JP)
(74) Representative: Kuhnen & Wacker Patent- und Rechtsanwaltsbüro PartG mbB

(57) **Abstract**

A laser welding method includes a preparation step and a welding step. A first member and a second member prepared in the preparation step have end faces that are adjusted to the same level in height in a state that the first and second members are stacked with each other. The first member has a stepped face lower than its end face at a position away from a boundary between the stacked first and second members. The second member has a stepped face lower than or higher than its end face at a position away from the boundary between the stacked first and second members. In the welding step, the boundary between the end faces of the first and second members is irradiated with a laser beam in a state that hoods are placed on the stepped faces of the first and second members, respectively.

## Description

### BACKGROUND

The present invention relates to a laser welding method and a power storage device manufacturing method.

Japanese Patent Application Laid-Open Publication No. 2019-126829 discloses a method for suppressing welding spatters or the like generated during the laser processing from adhering to nearby electronic components. In this method, a case-like structure abuts against a substrate with electronic components such that the structure covers the electronic components, and the substrate and the case-like structure constitute a space (isolation area) for isolating the electronic components from the outside. In this state, a predetermined area on the substrate is processed by laser beam irradiation, where the area is displaced, in-plan direction of the substrate surface, from the electronic components and is outside of the isolation area. According to this publication, a gap may be formed between the substrate and the case-like structure. Thus, the inside of the isolation area is pressurized so as to be in a positive pressure state relative to the external environment. According to this publication, this makes it possible to suppress welding spatters generated during the laser processing of the substrate from going through the gap and adhering to the electronic components.

### SUMMARY

The present inventors have sought to provide a novel laser welding method and power storage device manufacturing method suitable for preventing welding spatters generated during laser welding from scattering to the vicinity of the welded areas.

The laser welding method disclosed herein includes a preparation step of preparing a first member and a second member to be stacked on the first member, and a welding step of welding the first member and the second member to each other by irradiating a boundary between the stacked first member and second member with a laser beam. The first member and the second member prepared in the preparation step have end faces that are adjusted to the same level in height in a state that the first and second members are stacked with each other. The first member has a stepped face lower than the end face of the first member at a position away from the boundary formed when stacked with the second member. The second member has a stepped face lower than or higher than the end face of the second member at a position away from the boundary formed when stacked with the first member. In the welding step, the boundary between the end faces of the first member and the second member is irradiated with a laser beam in a state that hoods are placed on the stepped faces of the first and second members, respectively.

According to this method, even if a gap is caused between the stepped faces and the hoods placed on both stepped faces of the first and second members due to, e.g., tolerances, welding spatters generated during the laser welding can be prevented from scattering outside the hoods through the gap.

### BRIEF DESCRIPTION OF THE DRAWINGS

FIG. 1 is a perspective view of a power storage device manufactured by a power storage device manufacturing method according to an embodiment of the present invention;
FIG. 2 is another perspective view of the power storage device in FIG. 1 inverted upside down;
FIG. 3 is a schematic diagram showing an internal configuration of the power storage device in FIG. 1;
FIG. 4 is a partially enlarged sectional view showing welded areas and their vicinity in a first current collecting member (first member) and a second current collecting member (second member);
FIG. 5 is a flowchart of the power storage device manufacturing method as an embodiment of the present invention;
FIG. 6 is a partially enlarged perspective view showing areas to be welded and their vicinity in the first current collecting member (first member) and the second current collecting member (second member) before welding;
FIG. 7 is a perspective view showing a state that hoods are placed on the first current collecting member (first member) and the second current collecting member (second member) to be welded to each other;
FIG. 8 is a partially enlarged sectional view showing a step of welding the first current collecting member (first member) and the second current collecting member (second member) to each other (first welding step);
FIG. 9 is a partially enlarged sectional view showing a variation of the welded areas and their vicinity in the first current collecting member (first member) and the second current collecting member (second member);
FIG. 10 is a partially enlarged sectional view showing a step of welding the first current collecting member (first member) and the second current collecting member (second member) in FIG. 9 to each other (first welding step);
FIG. 11 is a partially enlarged sectional view showing another variation of the welded areas and their vicinity in the first current collecting member (first member) and the second current collecting member (second member); and
FIG. 12 is a partially enlarged sectional view showing a step of welding the first current collecting member (first member) and the second current collecting member (second member) in FIG. 11 to each other (first welding step).

### DETAILED DESCRIPTION

The embodiment of the technology disclosed herein will be explained below with reference to the drawings. Naturally, the embodiment explained herein is not intended to particularly limit the scope of the present invention. Each of the drawings is schematically depicted and does not necessarily reflect the actual objects. The same members and areas having the same effects are marked with the same symbols as appropriate, and their stacked descriptions are omitted as appropriate. In the present specification, expressions indicating numerical ranges such as "X to Y" mean "X or more and Y or less" unless otherwise specified.

In the present specification, the "power storage device" refers to a chargeable and dischargeable device. Power storage devices include not only batteries commonly referred to as lithium-ion batteries or lithium secondary batteries but also batteries such as lithium polymer batteries and nickel-metal hydride batteries. Secondary batteries generally refer to batteries that can be repeatedly charged and discharged in association with transfer of charge carriers between positive and negative electrodes. For the power storage device, an electrolytic solution or a solid electrolyte may be used as an electrolyte. For example, the secondary battery may be a secondary battery with a so-called liquid-based electrolytic solution, or a so-called all-solid-state battery with a solid electrolyte. Also, power storage devices include capacitors such as electric double-layer capacitors and lithium ion capacitors.

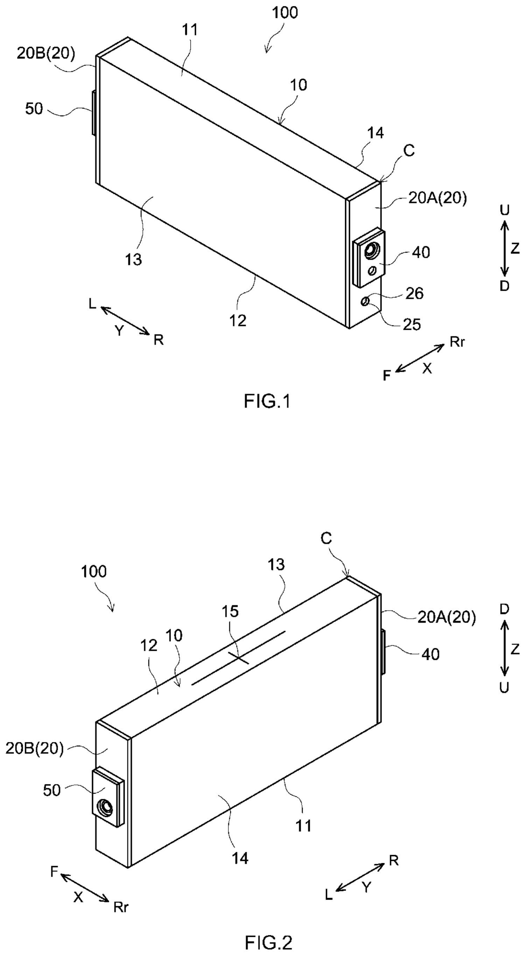

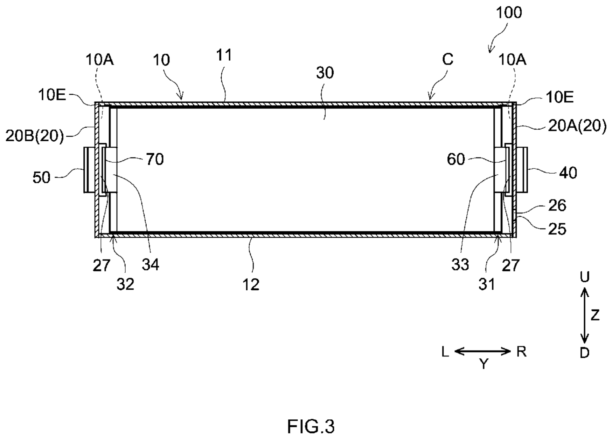

FIG. 1 is a perspective view of a power storage device 100 manufactured by a power storage device manufacturing method, described later, according to an embodiment of the present invention. FIG. 2 is a perspective view of the power storage device 100 in FIG. 1 inverted upside down. FIG. 3 is a schematic diagram showing an internal configuration of the power storage device 100. The symbols F, Rr, L, R, U, and D in the drawings represent front, rear, left, right, up, and down, respectively. In the following description, a thickness direction of the power storage device 100 is defined as X-direction, a width direction perpendicular to the thickness direction is defined as Y-direction, and a vertical direction perpendicular to both the width direction and the thickness directions is defined as Z-direction.

As shown in FIG. 1 to FIG. 3, the power storage device 100 includes a case body 10, two sealing plates 20 (sealing plate 20A and sealing plate 20B), an electrode assembly 30 (shown in FIG. 3), a positive electrode terminal 40, a negative electrode terminal 50, a positive current collector portion 60 (shown in FIG. 3), a negative current collector portion 70 (shown in FIG. 3), and an electrolytic solution (not illustrated). In this embodiment, the power storage device 100 is a lithium ion secondary battery.

The case body 10 and the sealing plates 20A and 20B constitute a case C of the power storage device 100. The case C serves as a housing for the power storage device 100. In this embodiment, the case C has a flat and rectangular parallelepiped (e.g. square) outer shape. The case C accommodates the electrode assembly 30 and the electrolytic solution.

As shown in FIG. 3, in this embodiment, the case body 10 is a rectangular cylindrical case having openings 10A on both ends (i.e., the case body 10 in this embodiment has openings on both side faces). Specifically, the case body 10 has edge portions 10E on both ends in Y-direction, which define the openings 10A. Each of the edge portions 10E surrounds each of the openings 10A. That is, each of the edge portions 10E is the edge of each opening 10A. Furthermore, the case body 10 has a shape extending in Y-direction. This case body 10 is made of a metal. Examples of the constituent material for the case body 10 include aluminum, an aluminum alloy, iron, and an iron alloy. From the viewpoint of achieving both weight saving and a required rigidity for the case body 10, the constituent material for the case body 10 is preferably aluminum, or an aluminum alloy containing aluminum as a main component.

As shown in FIG. 1 and FIG. 2, the case body 10 has a pair of narrow side faces 11 and 12, and a pair of wide side faces 13 and 14 as case walls. The narrow side faces 11 and 12 each has short sides extending in X-direction and long sides extending in Y-direction, and each has an almost rectangular shape extending in X-direction and Y-direction. The pair of narrow side faces 11 and 12 are opposed to each other in Z-direction. The narrow side face 11 constitutes the top face of the case C or the case body 10. The narrow side face 12 constitutes the bottom face of the case body 10.

The wide side faces 13 and 14 each has long sides extending in Y-direction and short sides extending in Z-direction, and each has an almost rectangular shape extending in Y-direction and Z-direction. The pair of wide side faces 13 and 14 are opposed to each other in X-direction. The wide side face 13 constitutes the front face of the case body 10. The wide side face 14 constitutes the rear face of the case body 10. One long side of the wide side face 13 (front face) is connected to one long side of the narrow side face 11 (top face), and the other long side of the wide side face 13 is connected to one long side of the narrow side face 12 (bottom face). One long side of the wide side face 14 (rear face) is connected to the other long side of the narrow side face 11, and the other long side of the wide side face 14 is connected to the other long side of the narrow side face 12.

One Y-directional end portions (right end portions in FIG. 1 and FIG. 2) of the narrow side faces 11 and 12 and the wide side faces 13 and 14 constitute one edge portion 10E (shown in FIG. 3) of the case body 10, and the other Y-directional end portions thereof (left end portions in FIG. 1 and FIG. 2) constitute the other edge portion 10E (shown in FIG. 3) of the case body 10. This case body 10 is formed e.g. by bending a single metal plate into a cylindrical shape, and then joining the mating parts to each other. The joining method is exemplified by welding joining.

In this embodiment, as shown in FIG. 2, a gas release valve 15 is placed on the narrow side face 12 (bottom face). The gas release valve 15 is configured so as to be ruptured when the pressure inside the case C rises to a predetermined value or higher. The rupture of the gas release valve 15 allows gas inside the case C to be discharged outside the case C, so that additional pressure rise inside the case C can be prevented or suppressed. This gas release valve 15 may be in a shape of a cross-shaped notch, a linear notch (only vertical or horizontal line), an elliptical valve (with a notch thereinside), or a circular valve (with a notch thereinside), where a thin-walled portion for rupturing the valve is formed in the case C by formation of the notch in the case C. FIG. 2 shows an example of a case that the gas release valve 15 is a cross-shaped notch. The dimensions (length, depth) of the notch in the gas release valve 15 can be determined as appropriate considering e.g. the pressure capacity of the case C. In the case C, the gas release valve 15 may be placed on locations other than the narrow side face 12, e.g. on the narrow side face 11, the wide side face 13, the wide side face 14, the sealing plate 20A, or the sealing plate 20B. The number of gas release valves 15 provided in the case C may be one or two or more. FIG. 2 exemplarily shows a case where the number of gas release valves 15 is one.

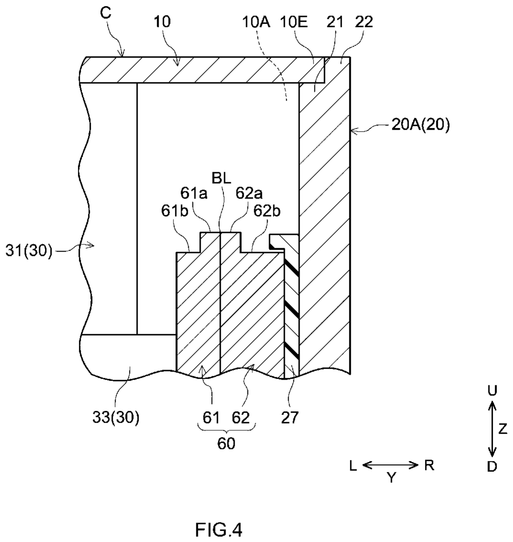

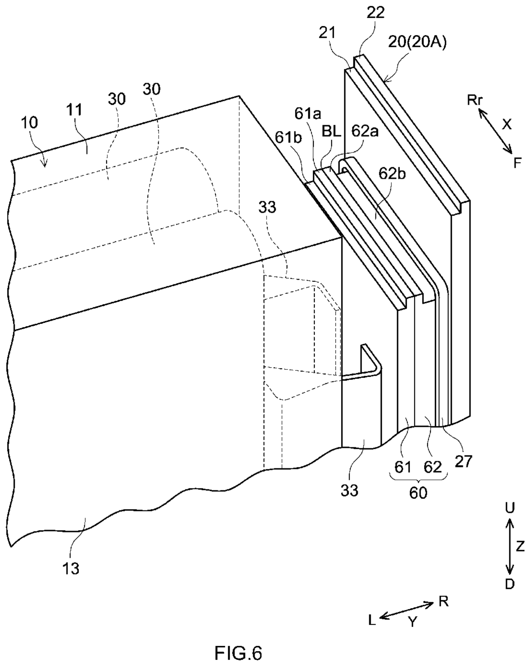

The sealing plates 20 (sealing plate 20A, sealing plate 20B) are members that close the openings 10A (shown in FIG. 3) of the case body 10. The sealing plate 20A closes one opening 10A (right side in FIG. 3) of the case body 10, and the sealing plate 20B closes the other opening 10A (left side in FIG. 3) of the case body 10. Each sealing plate 20 is welded to one edge portion 10E (edge of the opening 10A) of the case body 10 over its entire periphery to close the opening 10A. In this embodiment, the sealing plate 20 is a flat plate-shaped member having an almost rectangular shape in a plan view, which can close the opening 10A. In this embodiment, each sealing plate 20 has an insertion portion 21 and a circumferential end portion 22 (shown in FIG. 4 and FIG. 6). The insertion portion 21 is a part inserted into the opening 10A of the case body 10. The circumferential end portion 22 is a thin-walled end portion extending over the entire circumference of the sealing plate 20. In this embodiment, the edge portion 10E of the case body 10 and the circumferential end portion 22 of the sealing plate 20 are welded to each other over the entire circumference of the sealing plate 20.

In this embodiment, as shown in FIG. 1, a liquid injection hole 25 is placed on the sealing plate 20A. The liquid injection hole 25 is a hole for injecting an electrolytic solution into the case C after the sealing plate 20A and the sealing plate 20B are assembled onto the case body 10. The liquid injection hole 25 is sealed by the sealing member 26 after injection of the electrolytic solution. In the case C, this liquid injection hole 25 may be provided on the sealing plate 20B instead of the sealing plate 20A, or may be provided on the case body 10. In the case C, the liquid injection hole 25 may be provided on the surface where the aforementioned gas release valve 15 is placed, or on a surface different from the surface with the gas release valve 15.

In this embodiment, as shown in FIG. 3, a current collector holder 27 is fixed to the inner surface (surface of the insertion portion 21) of the sealing plate 20 within the case C. The current collector holder 27 fixed to the sealing plate 20A has a shape capable of holding the positive current collector portion 60. The current collector holder 27 fixed to the sealing plate 20B has a shape capable of holding the negative current collector portion 70. In X-direction and Z-direction, the current collector holder 27 is located within the surface of the insertion portion 21 of the sealing plate 20. Examples of constituent materials for the current collector holder 27 include polypropylene, polyethylene terephthalate, and polyimide.

The electrode assembly 30 is accommodated in the case C or the case body 10, as shown in FIG. 3 and FIG. 4. The electrode assembly 30 has a positive electrode 31 and a negative electrode 32. In this embodiment, the electrode assembly 30 is a so-called wound electrode assembly. The electrode assembly 30 is formed by winding a laminated body around a winding axis in the longitudinal direction, the laminated body including the strip-shaped positive electrode 31 and the strip-shaped negative electrode 32 which are laminated with a strip-shaped separator (not illustrated) interposed therebetween. Instead of this configuration, the electrode assembly 30 may be a laminated electrode assembly in which a quadrate positive electrode and a quadrate negative electrode stacked while insulated from each other.

In this embodiment, the outer shape of the electrode assembly 30 is flat. The electrode assembly 30 has a pair of curved portions and a pair of flat faces that connect the pair of curved portions. This electrode assembly 30 (wound electrode assembly) is accommodated in the case C in a state that its winding axis is oriented along Y-direction. The pair of curved portions of the electrode assembly 30 are opposed to the pair of narrow side faces 11 and 12 respectively of the case body 10. Instead of such an accommodation arrangement, the electrode assembly 30 may be accommodated in the case C in a state that its winding axis is oriented along Z-direction.

The positive electrode 31 of the electrode assembly 30 has, for example, a stacked structure of a positive current collector and a positive electrode active material layer. The positive current collector has, for example, a strip shape and is made of a conductive metal. Examples of the conductive metal include aluminum, an aluminum alloy, nickel, and stainless steel. The positive current collector is preferably a conductive metal foil, more preferably an aluminum foil. The positive electrode active material layer is arranged, for example, in a strip shape along the longitudinal direction on at least one face of the strip-shaped positive current collector. The positive electrode active material layer contains a positive electrode active material capable of reversibly storing and releasing charge carriers, and a binder. The positive electrode active material is preferably a lithium transition metal composite oxide. Specific examples of the oxide include a lithium-cobalt composite oxide, a lithium-manganese composite oxide, a lithium-nickel composite oxide, a lithium-nickel-manganese composite oxide, a lithium-nickel-cobalt composite oxide, and a lithium-nickel-cobalt-manganese composite oxide. Examples of the binder include polyvinylidene fluoride (PVdF).

The negative electrode 32 of the electrode assembly 30 has, for example, a stacked structure of a negative current collector and a negative electrode active material layer. The negative current collector has, for example, a strip shape and is made of a conductive metal. Examples of the conductive metal for the negative electrode include copper, a copper alloy, nickel, and stainless steel. The negative current collector is preferably a conductive metal foil, more preferably a copper foil. The negative electrode active material layer is arranged, for example, in a strip shape along the longitudinal direction on at least one face of the strip-shaped negative current collector. The negative electrode active material layer contains a negative electrode active material capable of reversibly storing and releasing charge carriers, and a binder. Examples of the negative electrode active material include carbon materials such as graphite and carbon. Examples of the binder for the negative electrode active material include styrene-butadiene rubber (SBR) and carboxymethyl cellulose (CMC).

The separator is a member for insulating the positive electrode active material layer and the negative electrode active material layer from each other while preserving an ion-conductive electrolytic solution between the two layers. The separator is preferably a porous resin sheet made of a polyolefin resin. Examples of the polyolefin resin include polyethylene (PE) and polypropylene (PP). A heat resistant layer (HRL) containing an inorganic filler may be provided on the surface of the separator. Examples of constituent materials for the inorganic filler include alumina, boehmite, aluminum hydroxide, and titania.

As shown in FIG. 3, the electrode assembly 30 includes a positive electrode tab 33 and a negative electrode tab 34 extending in directions opposite to each other. The positive electrode tab 33 extends toward the sealing plate 20A on one end (right side in FIG. 3) of the electrode assembly 30 in Y-direction. The positive electrode tab 33 constitutes a part of the positive electrode 31. Specifically, the positive electrode tab 33 is a part of an area where the positive electrode active material layer is not layered on the surface of the aforementioned positive current collector (strip-shaped) and its surface is exposed, in the positive electrode 31. A plurality of positive electrode tabs 33 are provided at a predetermined interval in the longitudinal direction of the positive current collector. In the electrode assembly 30 as the wound electrode assembly, the plurality of positive electrode tabs 33 are stacked to form a positive electrode tab group, and this positive electrode tab group (the plurality of positive electrode tabs 33 stacked) is connected to the positive current collector portion 60. The electrode assembly 30 is electrically connected to the positive electrode terminal 40 via the positive current collector portion 60. The negative electrode tab 34 extends toward the sealing plate 20B on the other end (left side in FIG. 3) of the electrode assembly 30 in Y-direction. The negative electrode tab 34 constitutes a part of the negative electrode 32. Specifically, the negative electrode tab 34 is a part of an area where the negative electrode active material layer is not layered on the surface of the aforementioned negative current collector (strip-shaped) and its surface is exposed, in the negative electrode 32. A plurality of negative electrode tabs 34 are provided at a predetermined interval in the longitudinal direction of the negative current collector. In the electrode assembly 30 as the wound electrode assembly, the plurality of negative electrode tabs 34 are stacked to form a negative electrode tab group, and this negative electrode tab group (the plurality of negative electrode tabs 34 stacked) is connected to the negative current collector portion 70. The electrode assembly 30 is electrically connected to the negative electrode terminal 50 via the negative current collector portion 70. In this embodiment, two electrode bodies 30 are accommodated in the case C (see FIG. 6).

The positive electrode terminal 40 is attached to the sealing plate 20A, as shown in FIG. 1. For example, the sealing plate 20A has a terminal opening portion that penetrates the sealing plate 20A in the thickness direction, and the positive electrode terminal 40 is attached to the opening portion in a state that a gasket made of an insulating material is interposed between the positive electrode terminal 40 and the sealing plate 20A. A method for attaching the positive electrode terminal 40 to the sealing plate 20A can be exemplified by caulking. The positive electrode terminal 40 is exposed to both the outside and inside of the case C. Inside the case C, the positive electrode terminal 40 is connected to the positive current collector portion 60. This positive electrode terminal 40 is preferably made of metal, more preferably aluminum or an aluminum alloy.

The negative electrode terminal 50 is attached to the sealing plate 20B, as shown in FIG. 2. For example, the sealing plate 20B has a terminal opening portion that penetrates the sealing plate 20B in the thickness direction, and the negative electrode terminal 50 is attached to the opening portion in a state that a gasket made of an insulating material is interposed between the negative electrode terminal 50 and the sealing plate 20B. A method for attaching the negative electrode terminal 50 to the sealing plate 20B can be exemplified by caulking. The negative electrode terminal 50 is exposed to both the outside and inside of the case C. Inside the case C, the negative electrode terminal 50 is connected to the negative current collector portion 70. This negative electrode terminal 50 is preferably made of a metal, more preferably copper or a copper alloy.

The positive current collector portion 60 is located between the electrode assembly 30 and the sealing plate 20A in the case body 10, as shown in FIG. 3 and FIG. 4. The positive current collector portion 60 includes a current collecting member 61 (first member) as a first current collecting member and a current collecting member 62 (second member) as a second current collecting member, as shown in FIG. 4. The stacked current collecting members 61 and 62 constitute the positive current collector portion 60. Examples of constituent materials for the positive current collector portion 60 (current collecting members 61, 62) include aluminum and an aluminum alloy.

The current collecting member 61 is a conductive plate-shaped member located on the electrode assembly 30 side in the positive current collector portion 60. The current collecting member 61 has short sides extending in X-direction and long sides extending in Z-direction, and has an almost rectangular shape extending in X-direction and Z-direction. The current collecting member 61 has an end face 61a and a stepped face 61b on its upper end portion in Z-direction. The end face 61a extends along a boundary BL (boundary line) between the current collecting member 61 and the current collecting member 62. The stepped face 61b extends along the boundary BL at a position away from the boundary BL and the current collecting member 62. The stepped face 61b is located on the side opposite to the boundary BL relative to the end face 61a in Y-direction. The stepped face 61b is located below the end face 61a in Z-direction. That is, the current collecting member 61 has a stepped face 61b that is lower than the end face 61a and the boundary BL and extends along the boundary BL, at a position away from the boundary BL between the current collecting member 61 and the current collecting member 62.

The positive electrode tab 33 of the electrode assembly 30 is joined to this current collecting member 61. In this embodiment, the positive electrode tabs 33 (positive electrode tab group as stacked positive electrode tabs 33) of one electrode assembly 30 and the positive electrode tabs 33 (positive electrode tab group as stacked positive electrode tabs 33) of the other electrode assembly 30 are each joined to the current collecting member 61 (see FIG. 6). The two joined areas are spaced away from each other in X-direction. By this joining, the electrode assembly 30 is electrically connected to the current collecting member 61 or the positive current collector portion 60. Examples of the joining method include ultrasonic joining and laser welding.

The current collecting member 62 is a conductive plate-shaped member located on the sealing plate 20A side in the positive current collector portion 60. The current collecting member 62 has short sides extending in X-direction and long sides extending in Z-direction, and has an almost rectangular shape extending in X-direction and Z-direction. The current collecting member 62 has an end face 62a and a stepped face 62b on its upper end portion in Z-direction. The end face 62a extends along the boundary BL between the current collecting member 61 and the current collecting member 62. The stepped face 62b extends along the boundary BL at a position away from the boundary BL and the current collecting member 61. The stepped face 62b is located on the side opposite to the boundary BL relative to the end face 62a in Y-direction. The stepped face 62b is located below the end face 62a in Z-direction. That is, the current collecting member 62 has a stepped face 62b that is lower than the end face 62a and extends along the boundary BL, at a position away from the boundary BL between the current collecting member 61 and the current collecting member 62.

This current collecting member 62 is assembled to the sealing plate 20A via the current collector holder 27 fixed to the surface of the insertion portion 21 of the sealing plate 20A. The current collecting member 62 is joined to the positive electrode terminal 40 that penetrates the sealing plate 20A. Thereby, the positive electrode terminal 40 is electrically connected to the current collecting member 62 or the positive current collector portion 60. Examples of the joining method include laser welding and caulking joining.

In the positive current collector portion 60, the end face 61a of the current collecting member 61 and the end face 62a of the current collecting member 62 are substantially adjusted to the same level in height (in Z-direction position). That is, the current collecting members 61 and 62 have end faces 61a and 62a respectively, which are adjusted to substantially the same level in height. The current collecting members 61 and 62 are laser-welded to each other on the boundary BL between the end faces 61a and 62a (laser welding is described later).

The negative current collector portion 70 is located between the electrode assembly 30 and the sealing plate 20B in the case body 10, as shown in FIG. 3. The negative current collector portion 70 is formed e.g. by stacking two current collecting members (conductive plate-shaped members). The negative current collector portion 70 may have a configuration similar to the configuration above-described for the positive current collector portion 60. The negative current collector portion 70 is assembled to the sealing plate 20B via the current collector holder 27 fixed to the surface of the insertion portion 21 of the sealing plate 20B. The negative current collector portion 70 is joined to the negative electrode terminal 50 that penetrates the sealing plate 20B (the joining method is exemplified by laser welding and caulking joining). Thereby, the negative electrode terminal 50 and the negative electrode current collector portion 70 are electrically connected to each other. The negative electrode tab 34 of the electrode assembly 30 is joined to this negative current collector portion 70. In this embodiment, the negative electrode tabs 34 (negative electrode tab group as the stacked negative electrode tabs 34) of one electrode assembly 30 and the negative electrode tabs 34 (negative electrode tab group as the stacked negative electrode tabs 34) of the other electrode assembly 30 are each joined to the negative current collector portion 70 (the joining method is exemplified by ultrasonic joining and laser welding). Thereby, the electrode assembly 30 and the negative current collector portion 70 are electrically connected to each other. Examples of the constituent material for the negative current collector portion 70 include copper and a copper alloy.

The electrolytic solution is accommodated in the case C together with the electrode assembly 30. The electrolytic solution is impregnated into the electrode assembly 30. The electrolytic solution is typically a non-aqueous liquid electrolyte (non-aqueous electrolytic solution) containing a non-aqueous solvent and a supporting salt. The non-aqueous solvent contains, for example, carbonates such as ethylene carbonate (EC), dimethyl carbonate (DMC), and ethylmethyl carbonate (EMC). The supporting salt is e.g. a fluorine-containing lithium salt. Examples of the fluorine-containing lithium salt include lithium hexafluorophosphate (LiPF₆) and lithium bis(fluorosulfonyl)imide (LiN(SO₂F)₂). Excessive electrolytic solution that has not been impregnated into the electrode assembly 30 may be stored in the case C. Instead of such an electrolytic solution, a solid electrolyte integrated with the electrode assembly 30 may be used.

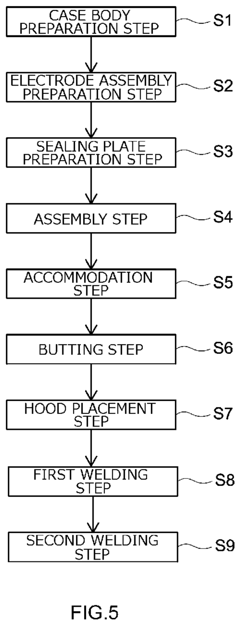

FIG. 5 is a flowchart showing the method for manufacturing the power storage device 100 as an example. The method for manufacturing the power storage device 100 is the power storage device manufacturing method according to an embodiment of the present invention, and includes a case body preparation step S1, an electrode assembly preparation step S2, a sealing plate preparation step S3, an assembly step S4, an accommodation step S5, a butting step S6, a hood placement step S7, a first welding step S8, and a second welding step S9.

In the case body preparation step S1, the case body 10 having openings 10A at both ends (case body 10 having the opening 10A on at least one side face) is prepared. The method for preparing the case body 10 in this step is not particularly limited. The case body 10 is formed e.g. by bending one rectangular flat plate.

In the electrode assembly preparation step S2, the electrode assembly 30 (see FIG. 3) is prepared. The electrode assembly 30 can be manufactured e.g. by laminating the aforementioned positive electrode 31, the separator, the negative electrode 32, and an additional separator in this order, and then winding the laminated assembly. The electrode assembly preparation step S2 may be implemented before or after the case body preparation step S1. The electrode assembly preparation step S2 may be implemented concurrently with the case body preparation step S1.

In the sealing plate preparation step S3, the sealing plates 20 (sealing plate 20A, sealing plate 20B) are prepared. The sealing plate 20 is an element to be attached to the case body 10 so as to close the opening 10A of the case body 10. In this step, the sealing plate 20A is prepared in a state that the aforementioned positive electrode terminal 40 (to which the positive current collector portion 60 or its current collecting member 62 is connected) and the current collector holder 27 are attached to the sealing plate 20A, and the sealing plate 20B is prepared e.g. in a state that the aforementioned negative electrode terminal 50 (to be connected to the negative current collector portion 70) and the current collector folder 27 are attached to the sealing plate 20B. Specifically, the sealing plate 20 is prepared by a process in which one rectangular flat plate is subjected to machining such as punching, and then electrode terminals (positive electrode terminal 40, negative electrode terminal 50) and the like are attached to the plate. This step leads to preparation of the current collecting member 62 (second member) that is one of the objects to be welded in the first welding step S8 described later. The sealing plate preparation step S3 may be implemented before or after the case body preparation step S1, or concurrently with the case body preparation step S1. The sealing plate preparation step S3 may be implemented before or after the electrode assembly preparation step S2, or concurrently with the electrode assembly preparation step S2.

In the assembly step S4, the current collecting member 61 is attached to the positive electrode tab 33 of the electrode assembly 30, and the negative current collector portion 70 and the sealing plate 20B are assembled to the negative electrode tab 34 side of the electrode assembly 30. Specifically, first, the current collecting member 61 of the positive current collector portion 60 is connected to the positive electrode tab group (stacked positive electrode tabs 33) in the electrode assembly 30, and then the negative current collector portion 70 is connected to the negative electrode tab group (stacked negative electrode tabs 34) (If the negative current collector portion 70 is formed such that two current collecting members are stacked as described above, these current collecting members are also connected to each other). Examples of the method for connecting the positive electrode tab group with the current collecting member 61, and for connecting the negative electrode tab group with the negative current collector portion 70 include an ultrasonic joining and laser welding (the method for connecting the current collecting members of the negative current collector portion 70 is exemplified by laser welding). In this step, the negative current collector portion 70 connected to the negative electrode tab 34 is then connected to the negative electrode terminal 50 attached to the sealing plate 20B. On the negative electrode terminal 50, a part exposed to the insertion portion 21 side of the sealing plate 20B is connected to the negative current collector portion 70 (see FIG. 3). Examples of the method for the connection include laser welding and caulking joining. In the assembly step S4, the electrode assembly 30 with the positive electrode tab 33 attached with the current collecting member 61 is prepared as described above, in which the negative current collector portion 70 and the sealing plate 20B are assembled to the negative electrode tab 34 side. That is, in this step, the electrode assembly 30 having the positive electrode tab 33 (current collecting tab) attached with the current collecting member 61 (first current collecting member) is prepared.

Subsequently, in the accommodation step S5, the electrode assembly 30 prepared in the assembly step S4 is accommodated in the case body 10 such that the current collecting member 61 is exposed from one opening 10A (opening 10A on the right side in FIG. 3) of the case body 10 (see FIG. 6). Specifically, the electrode assembly 30 prepared in the assembly step S4 is first inserted, with the positive electrode tab 33 side (including the current collecting member 61) as the head, into the case body 10 through one opening 10A (opening 10A on the left side in FIG. 3) of the case body 10. Then, the current collecting member 61 connected to the positive electrode tab 33 of the electrode assembly 30 is pulled out of the case body 10 through one opening 10A (opening 10A on the right side in FIG. 3) of the case body 10 in a state that the electrode assembly 30 is accommodated in the case body 10 (see FIG. 6). The aforementioned assembly step S4 and subsequent accommodation step S5 lead to preparation of the current collecting member 61 (first member) that is one of the current collecting members to be welded in the first welding step S8 described later.

In the butting step S6, as shown in FIG. 6, the current collecting member 61 and the current collecting member 62 attached to the sealing plate 20A are butted to each other (i.e., the current collecting members 61 and 62 that are plate-shaped members are stacked) outside the case body 10. In a state that the current collecting members 61 and 62 are stacked as shown in FIG. 6, the end face 61a of the current collecting member 61 and the end face 62a of the current collecting member 62 are adjusted to the same level in height (in Z-direction position). In this embodiment, the current collecting member 61 has a stepped face 61b lower than the end face 61a at a position away from the boundary BL with the current collecting member 62, in a state that the current collecting members 61 and 62 are stacked. Simultaneously, the current collecting member 62 has a stepped face 62b lower than the end face 62a at a position away from the boundary BL with the current collecting member 61.

The end face 61a has a width (Y-directional length) of e.g. 0.5 to 2 mm, preferably 0.7 to 1.5 mm. The stepped face 61b has a width (Y-directional length) of e.g. 0.5 to 2 mm, preferably 1.0 to 1.8 mm. The difference in the height level (step height) between the end face 61a and the stepped face 61b in Z-direction is e.g. 0.7 to 4 mm, preferably 2 to 3 mm. The end face 62a has a width (Y-directional length) of e.g. 0.5 to 2 mm, preferably 0.7 to 1.5 mm. The stepped face 62b has a width (Y-directional length) of e.g. 1 to 3 mm, preferably 1.5 to 2.5 mm. The difference in the height level (step height) between the end face 62a and the stepped face 62b in Z-direction is e.g. 0.7 to 4 mm, preferably 2 to 3 mm.

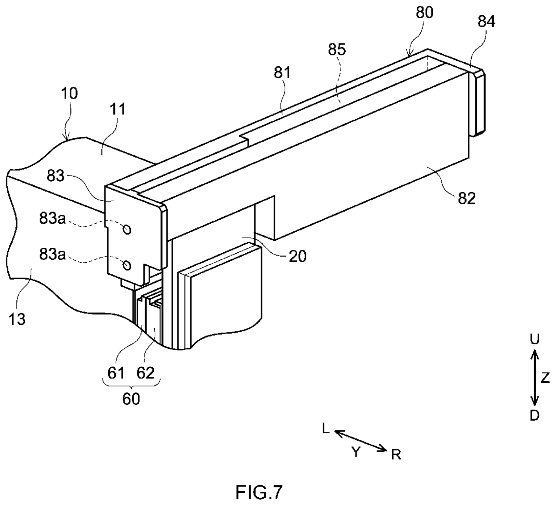

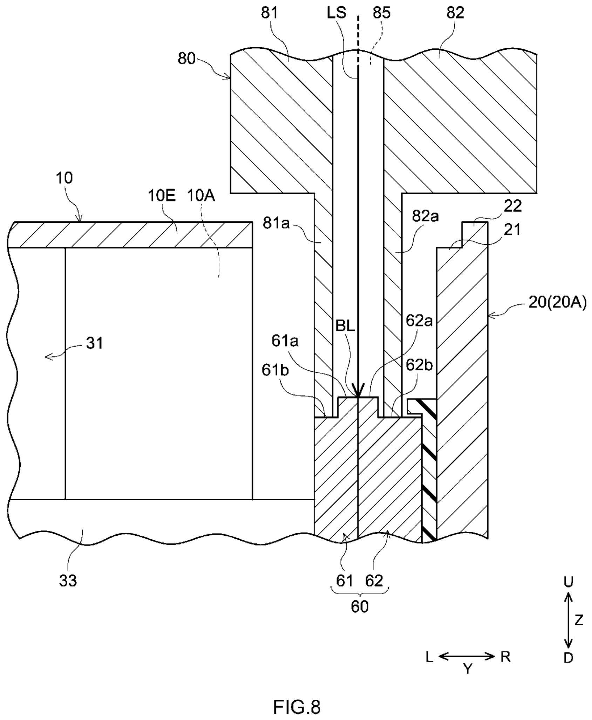

In the hood placement step S7, as shown in FIG. 7, a hood unit 80 is placed on the workpiece. The hood unit 80 includes hoods 81 and 82 as well as end walls 83 and 84, and has a slit-shaped space 85 enclosed by the hoods 81 and 82 as well as the end walls 83 and 84 (the space 85 is defined by the hoods 81 and 82 as well as the end walls 83 and 84). The hood 81 has a thin-walled hood portion 81a, and the hood 82 has a thin-walled hood portion 82a (see FIG. 8). The end wall 83 has blow holes 83a (FIG. 7 shows an exemplary case where the end wall 83 has two blow holes 83a). The blow holes 83a penetrate the end wall 83 in its thickness direction and communicate with the space 85. The end wall 84 has an opening portion (not illustrated) for dust collection. This opening portion penetrates the end wall 84 in its thickness direction and communicates with the space 85. In this step, the hood unit 80 is placed on the current collecting members 61 and 62 located outside the case body 10 such that the hood 81 or its thin-walled hood portion 81a abuts against the stepped face 61b of the current collecting member 61, and the hood 82 or its thin-walled hood portion 82a abuts against the stepped face 62b of the current collecting member 62. The thin-walled hood portions 81a and 82a can be fitted into the restricted narrow space between the case body 10 and the sealing plate 20. The thin-walled hood portions 81a and 82a have a thickness of e.g. 0.5 to 3.0 mm, preferably 0.7 to 2.0 mm. The thin-walled hood portion 81a (a part of the hood 81) placed on the stepped face 61b of the current collecting member 61 is arranged so as to face the opening 10A of the case body 10. The thin-walled hood portion 82a (a part of the hood 82) placed on the stepped face 62b of the current collecting member 62 is arranged so as to face the inner side face of the sealing plate 20A.

In the first welding step S8, as shown in FIG. 8, the current collecting members 61 and 62 are welded to each other while the hood unit 80 is placed thereon. Specifically, in this step, air is fed (blown) into the space 85 through the blow hole 83a in the hood unit 80. Simultaneously, air is sucked from the space 85 in the hood unit 80 through the aforementioned opening portion of the end wall 84. That is, in this step, air is fed from one side (the end wall 83 side) to the other side (the end wall 84 side) along the boundary BL between the current collecting members 61 and 62, and this air is sucked. The blowing amount and the suction amount of air are adjusted so that the space 85 is in a negative pressure state relative to the outside of the hood unit 80. Then, the boundary BL between the end faces 61a and 62a of the current collecting members 61 and 62 is irradiated with a laser beam LS while the hoods 81 and 82 are placed on the stepped faces 61b and 62b of the current collecting members 61 and 62 respectively. The area irradiated with the laser beam LS is scanned along the boundary BL. Thereby, the current collecting members 61 and 62 are welded to each other along the boundary BL (boundary line). In terms of the energy distribution in the laser beam cross-section, examples of types of the laser beam LS include a ring mode laser, a Gaussian laser, and a flat-top laser. Examples of the ring mode laser include a single-ring type ring mode laser, and a ring mode laser having a center portion and a ring portion surrounding the center portion in the laser beam cross-section. From the viewpoint of suppressing generation of welding spatters during the welding, a ring mode laser having a center portion and a ring portion surrounding the center portion in the laser beam cross-section is preferable. A wobbling welding may be performed in the laser welding of this step. In the wobbling welding, an area to be welded is welded while performing a laser beam wobbling (e.g. rotating) on the area (wide weld beads can be easily ensured for the formed welding portion by the laser beam wobbling). For the welding in the first welding step S8, the laser beam LS has a beam diameter of e.g. 0.4 to 0.8 mm, an output power of e.g. 1000 W, and a moving speed of e.g. 100 mm/s. For wobbling welding, furthermore, the wobbling width is e.g. 0.2 to 0.6 mm, and the wobbling frequency is 400 to 800 Hz. In the first welding step S8, multiple welding spatters are generated, which scatter radially from the processing area (laser welding working point) that is to be irradiated with the laser beam LS. The hood unit 80 or hoods 81 and 82 are useful for preventing or suppressing such welding spatters from scattering to the vicinity of the welding area (described later in detail).

Subsequently, in the second welding step S9, each sealing plate 20 is attached to the case body 10 so as to close the opening 10A, and then, in this state, the case body 10 and the sealing plate 20 are laser-welded to each other. In the state that the sealing plate 20 blocks the opening 10A, the insertion portion 21 of the sealing plate 20 is inserted into the opening 10A of the case body 10. After attaching the sealing plate 20 to the case body 10 and before the welding, the edge portion 10E of the case body 10 and its vicinity may be pressed against the insertion portion 21 of the sealing plate 20 using a clamp jig.

In the second welding step S9, for example, the boundary between the edge (edge portion 10E) of the opening 10A and the sealing plate 20 is irradiated with the laser beam LS to weld the boundary between the edge of the opening 10A and the sealing plate 20. The type of the laser beam LS and the possibility of the wobbling welding are the same as described above for the first welding step S8. In this step, the emission direction of the laser beam LS to the sealing plate 20 intersects (e.g., perpendicular to) Y-direction. In this embodiment, it is preferable that the sealing plate 20 is continuously irradiated with the laser beam LS in the circumferential direction of the opening 10A to continuously weld the case body 10 and the sealing plate 20 to each other in the circumferential direction. Thereby, the edge portion 10E of the case body 10 and the sealing plate 20 are joined over the entire circumferential area of the opening 10A to form a hermetically sealed case C. The sealing plate 20B may be welded to the case body 10 after the accommodation step S5, e.g. before the butting step S6 (in contrast, the sealing plate 20A is welded after the butting step S6 to the first welding step S8 are completed). For the welding in the second welding step S9, the laser beam LS has a beam diameter of e.g. 0.8 to 1.0 mm, an output power of e.g. 6000 W, and a moving speed of e.g. 200 mm/s.

After the second welding step S9, a liquid injection step of injecting an electrolytic solution into the case body 10, an aging step of allowing the power storage device 100 to stand for a predetermined time after charging the power storage device 100, a check step of checking internal short circuits and the like in the power storage device 100, and other steps are implemented as appropriate. In the liquid injection step, specifically, the electrolytic solution is injected into the case body 10 through the liquid injection hole 25. As described above, the power storage device 100 can be manufactured.

In the aforementioned power storage device manufacturing method, as shown in FIG. 6 and FIG. 8, the current collecting member 61 (first member) and the current collecting member 62 (second member) prepared as objects to be welded in the first welding step S8 have the end faces 61a and 62a respectively, which are adjusted to the same level in height when stacked with each other. Simultaneously, the current collecting member 61 has the stepped face 61b lower than the end face 61a at a position away from the boundary BL between the stacked current collecting member 61 and current collecting member 62, and the current collecting member 62 (second member) has the stepped face 62b lower than the end face 62a at a position away from the boundary BL between the stacked current collecting member 61 and current collecting member 62. Then, in the first welding step S8, as shown in FIG. 8, the boundary BL between the end faces 61a and 62a of the current collecting members 61 and 62 is irradiated with the laser beam LS while the hoods 81 and 82 are placed on the stepped faces 61b and 62b of the current collecting members 61 and 62 respectively (gaps may be generated between the hoods 81/82 and the stepped faces 61b/62b due to the dimensional tolerance of the hoods 81 and 82). In the first welding step S8 of the power storage device manufacturing method or the laser welding method with this configuration, multiple welding spatters are generated, which scatter radially from the processing area (laser welding working point) that is to be irradiated with the laser beam LS. Each of the welding spatters scatters linearly (i.e., the scattering trajectory of the welding spatters is linear). Among the multiple welding spatters scattered from the laser welding working point, welding spatters having a velocity component directed toward the hood 81 side (scattering linearly) collide with the hood 81 or the inner wall face of the thin-walled hood portion 81a of the hood 81. Such welding spatters are prevented or suppressed from passing through the gap, which may occur due to the dimensional tolerance, between the hood 81 and the stepped face 61b of the current collecting member 61. Among the multiple welding spatters scattered from the laser welding working point, welding spatters having a velocity component directed toward the hood 82 side (scattering linearly) collide with the hood 82 or the inner wall face of the thin-walled hood portion 82a of the hood 82. Such welding spatters are prevented or suppressed from passing through the gap, which may occur due to the dimensional tolerance, between the hood 82 and the stepped face 62b of the current collecting member 62. In the manufacturing process of the aforementioned power storage device 100, the separation distance between the electrode assembly 30 (accommodated in the case body 10) and the current collecting member 61 (drawn outside the case body 10) connected via the positive electrode tab 33 is relatively short, e.g. about 4 to 7 mm. However, even if the locations of the hoods 81 and 82 are close to the laser welding working point and therefore high-speed welding spatters approach the hoods 81 and 82, the welding spatters can be appropriately prevented or suppressed from passing through between the hoods 81/82 and the stepped faces 61b/62b of the current collecting members 61 and 62. As described above, the laser welding in the first welding step S8 (laser welding with hoods 81 and 82 placed on the stepped faces 61b and 62b) is suitable for preventing or suppressing the welding spatters from scattering beyond the hoods 81 and 82 to the vicinity of the welding area.

In the first welding step S8, as described above, in the space 85 between the hoods 81 and 82, the boundary BL between the current collecting member 61 (first member) and the current collecting member 62 (second member) is irradiated with the laser beam LS while air is sucked from one side to the other side along the boundary BL between the current collecting member 61 and the current collecting member 62. This configuration is suitable for maintaining a negative pressure state of the inside of the space 85 rather than the outside of the hood unit 80. Thus, this configuration is useful for preventing or suppressing the welding spatters from scattering beyond the hoods 81 and 82 to the vicinity of the welding area during the laser welding in the first welding step S8.

In the first welding step S8, as described above, in the space 85 between the hoods 81 and 82, the boundary BL between the current collecting member 61 (first member) and the current collecting member 62 (second member) is irradiated with the laser beam LS while air is fed and sucked from one side to the other side along the boundary BL between the current collecting member 61 and the current collecting member 62. This configuration is suitable for maintaining a negative pressure state of the inside of the space 85 rather than the outside of the hood unit 80 while collecting the welding spatters (dust collection). Thus, this configuration is useful for preventing or suppressing the welding spatters from scattering beyond the hoods 81 and 82 to the vicinity of the welding area during the laser welding in the first welding step S8.

In the first welding step S8, the hood 81 placed on the stepped face 61b of the current collecting member 61 is arranged so as to face the opening 10A of the case body 10. Thereby, the welding spatters are suppressed from invading into the case body 10. In the first welding step S8, the hood 82 placed on the stepped face 62b of the current collecting member 62 is arranged so as to face the inner side face (the face on the case body 10 side) of the sealing plate 20A. Thereby, the welding spatters are suppressed from adhering to the sealing plate 20A.

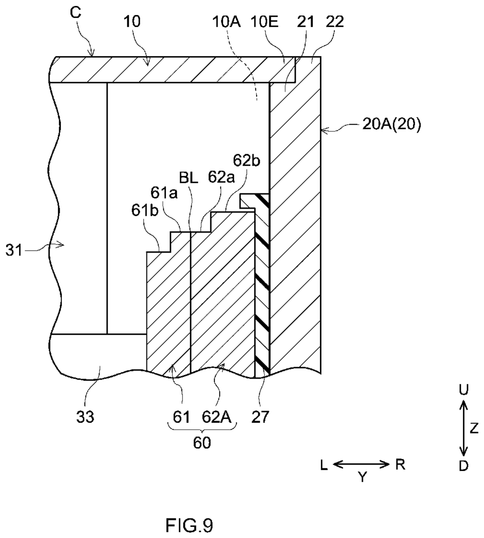

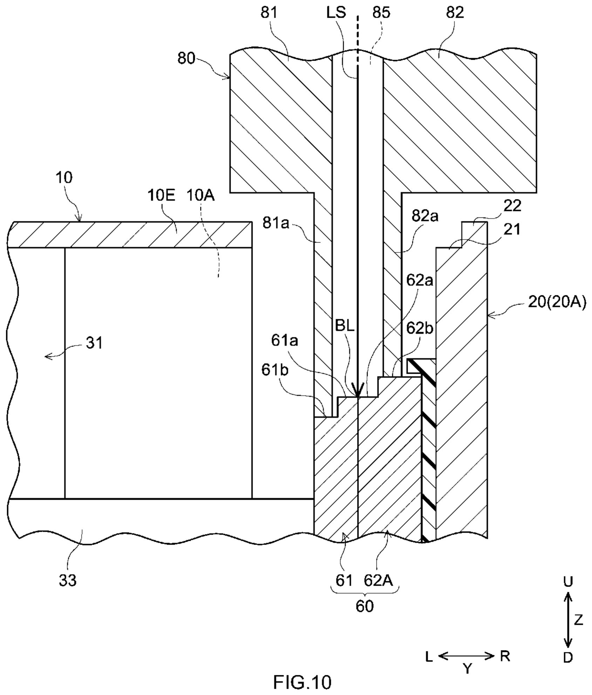

As shown in FIG. 9, the power storage device 100 may include a current collecting member 62A instead of the aforementioned current collecting member 62 (the current collecting member 61 is the same as the current collecting member 61 described above with reference to FIG. 4 and the like). The current collecting member 62A is different from the aforementioned current collecting member 62 in the positional relationship of the stepped face 62b relative to the end face 62a. Specifically, the stepped face 62b of the current collecting member 62A is located above the end face 62a in Z-direction. That is, the current collecting member 62A has a stepped face 62b that is higher than the end face 62a and extends along the boundary BL at a position away from the boundary BL with the current collecting member 61. In the first welding step S8 of the process for manufacturing the power storage device 100 including this current collecting member 62A, as shown in FIG. 10, after the end face 61a of the current collecting member 61 and the end face 62a of the current collecting member 62A are adjusted to the same level in height (in Z-direction position), the boundary BL between the end faces 61a and 62a of the current collecting members 61 and 62A is irradiated with the laser beam LS in a state that the hoods 81 and 82 are placed on the stepped faces 61b and 62b of the current collecting members 61 and 62A respectively. The irradiation area of the laser beam LS is scanned along the boundary BL. Thereby, the current collecting member 61 and the current collecting member 62A are welded to each other along the boundary BL (boundary line).

In the first welding step S8 of this variation, multiple welding spatters scatter radially from the laser welding working point, but, among the multiple welding spatters scattered from the laser welding working point, welding spatters having a velocity component directed toward the hood 81 side (scattering linearly) collide with the hood 81 or the inner wall face of the thin-walled hood portion 81a of the hood 81. Such welding spatters are prevented or suppressed from passing through the gap, which may occur due to the dimensional tolerance, between the hood 81 and the stepped face 61b of the current collecting member 61. Simultaneously, among the multiple welding spatters scattered from the laser welding working point, welding spatters having a velocity component directed toward the hood 82 side (scattering linearly) collide with a step wall face between the end face 62a and the stepped face 62b in the current collecting member 62A, or the inner wall face of the thin-walled hood portion 82a of the hood 82. Such welding spatters are prevented or suppressed from passing through the gap, which may occur due to the dimensional tolerance, between the hood 82 and the stepped face 62b of the current collecting member 62. Thus, the laser welding in the first welding step S8 of this variation (laser welding with the hoods 81 and 82 placed on the stepped faces 61b and 62b) is also suitable for preventing or suppressing welding spatters from scattering beyond the hoods 81 and 82 to the vicinity of the welding area, similarly to the first welding step S8 described in the above embodiment.

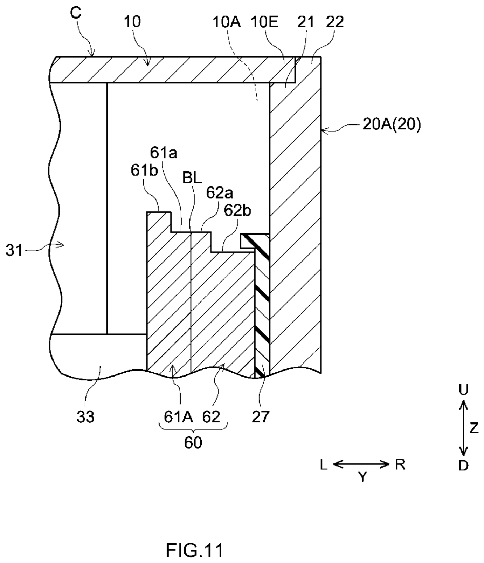

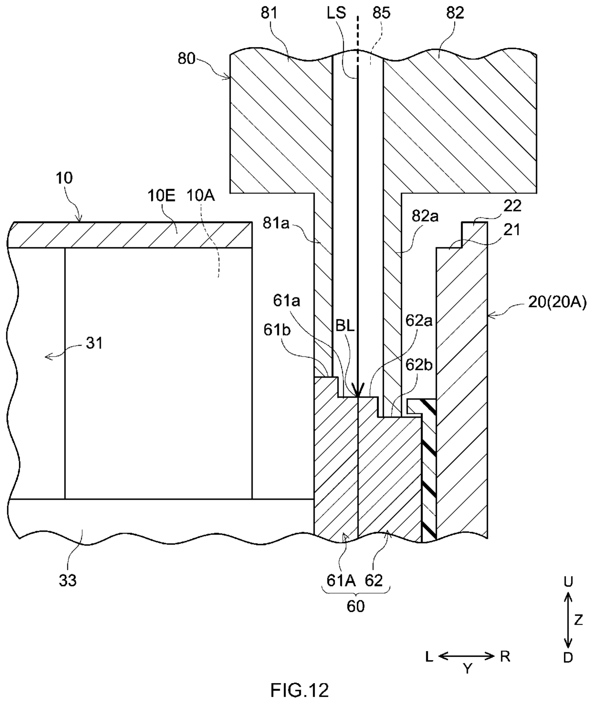

As shown in FIG. 11, the power storage device 100 may include a current collecting member 61A instead of the aforementioned current collecting member 61 (the current collecting member 62 is the same as the current collecting member 62 described above with reference to FIG. 4 and the like). The current collecting member 61A is different from the aforementioned current collecting member 61 in the positional relationship of the stepped face 61b relative to the end face 61a. Specifically, the stepped face 61b of the current collecting member 61A is located above the end face 61a in Z-direction. That is, the current collecting member 61A has a stepped face 61b that is higher than the end face 61a and extends along the boundary BL at a position away from the boundary BL with the current collecting member 62. In the first welding step S8 of the process for manufacturing the power storage device 100 including this current collecting member 61A, as shown in FIG. 12, after the end face 61a of the current collecting member 61A and the end face 62a of the current collecting member 62 are adjusted to the same level in height (in Z-direction position), the boundary BL between the end faces 61a and 62a of the current collecting members 61A and 62 is irradiated with the laser beam LS in a state that the hoods 81 and 82 are placed on the stepped faces 61b and 62b of the current collecting members 61A and 62 respectively. The irradiation area of the laser beam LS is scanned along the boundary BL. Thereby, the current collecting member 61A and the current collecting member 62 are welded to each other along the boundary BL (boundary line).

In the first welding step S8 of this variation, multiple welding spatters scatter radially from the laser welding working point, but, among the multiple welding spatters scattered from the laser welding working point, welding spatters having a velocity component directed toward the hood 81 side (scattering linearly) collide with a step wall face between the end faces 61a and the stepped face 61b in the current collecting member 61A, or the inner wall face of the thin-walled hood portion 81a of the hood 81. Such welding spatters are prevented or suppressed from passing through the gap, which may occur due to the dimensional tolerance, between the hood 81 and the stepped face 61b of the current collecting member 61A. Simultaneously, among the multiple welding spatters scattered from the laser welding working point, welding spatters having a velocity component directed toward the hood 82 side (scattering linearly) collide with the hood 82 or the inner wall face of the thin-walled hood portion 82a of the hood 82. Such welding spatters are prevented or suppressed from passing through the gap, which may occur due to the dimensional tolerance, between the hood 82 and the stepped face 62b of the current collecting member 62. Thus, the laser welding in the first welding step S8 of this variation (laser welding with the hoods 81 and 82 placed on the stepped faces 61b and 62b) is also suitable for preventing or suppressing welding spatters from scattering beyond the hoods 81 and 82 to the vicinity of the welding area, similarly to the first welding step S8 described in the above embodiment.

The power storage device 100 is usable for various applications. The power storage device 100 can be suitably used e.g. as a motor power source (drive power source) mounted in vehicles such as passenger vehicles and trucks. The type of vehicle is not particularly limited, but examples of the vehicle include plug-in hybrid electric vehicles (PHEV), hybrid electric vehicles (HEV), and battery electric vehicles (BEV).

As described above, the technology disclosed herein has been explained in various ways. Unless otherwise specified, the present invention is not limited to the embodiment and the like described herein. Furthermore, the technology disclosed herein may be modified in various ways. Unless problems arise, each of the components and processings described herein may be omitted or combined with each other as appropriate. The present specification includes disclosures described in the following items.

### Item 1:

A laser welding method including:
a preparation step of preparing a first member and a second member to be stacked on the first member; and
a welding step of welding the first member and the second member to each other by irradiating a boundary between the stacked first member and second member with a laser beam, in which
the first member and the second member prepared in the preparation step each has end face, the end faces being adjusted to the same level in height in a state that the first and second members are stacked with each other,
the first member has a stepped face lower than the end face of the first member at a position away from the boundary formed when stacked with the second member,
the second member has a stepped face lower than or higher than the end face of the second member at a position away from the boundary formed when stacked with the first member, and
in the welding step, the boundary between the end faces of the first member and the second member is irradiated with the laser beam in a state that hoods are placed on the stepped faces of the first member and the second member, respectively.

### Item 2:

The laser welding method according to Item 1, in which, in the welding step, the boundary between the first member and the second member is irradiated with the laser beam while air is sucked from one side to another side along the boundary between the first member and the second member, in a space between the hoods.

### Item 3:

The laser welding method according to Item 1, in which, in the welding step, the boundary between the first member and the second member is irradiated with the laser beam while air is fed and sucked from one side to another side along the boundary between the first member and the second member, in a space between the hoods.

### Item 4:

The laser welding method according to any one of Items 1 to 3, in which the stepped face is lower than the end face in the second member.

### Item 5:

A power storage device manufacturing method including:
a step of preparing a case body having an opening on at least one side thereof;
a step of preparing an electrode assembly having, on at least one side thereof, a current collecting tab attached with a first current collecting member;
a step of preparing a sealing plate to be attached to the opening, the sealing plate being assembled with a second current collecting member to be welded with the first current collecting member;
a step of accommodating the electrode assembly in the case body such that the first current collecting member is exposed from the opening of the case body; and
a step of welding the first current collecting member and the second current collecting member to each other by irradiating a boundary between the stacked first current collecting member and second current collecting member with a laser beam, in which
the first current collecting member and the second current collecting member each has an end face, the end faces being adjusted to the same level in height in a state that the first and second current collecting members are stacked with each other,
one of the first current collecting member and the second current collecting member has a stepped face lower than the end face at a position away from the boundary formed when stacked with the other current collecting member,
the other one of the first current collecting member and the second current collecting member has a stepped face lower than or higher than the end face at a position away from the boundary formed when stacked with the one current collecting member, and
in the welding step, the boundary between the end faces of the first current collecting member and the second current collecting member is irradiated with the laser beam in a state that hoods are placed on the stepped faces of the first current collecting member and the second current collecting member, respectively.

### Item 6:

The power storage device manufacturing method according to Item 5, in which the hood placed on the stepped face of the first current collecting member is arranged so as to face the opening of the case body, and the hood placed on the stepped face of the second current collecting member is arranged so as to face the inner side face of the sealing plate.

### Item 7:

The power storage device manufacturing method according to Item 5 or 6, in which, in the welding step, the boundary between the first current collecting member and the second current collecting member is irradiated with the laser beam while air is sucked from one side to another side along the boundary between the first current collecting member and the second current collecting member, in a space between the hoods.

### Item 8:

The power storage device manufacturing method according to Item 5 or 6, in which, in the welding step, the boundary between the first current collecting member and the second current collecting member is irradiated with the laser beam while air is fed and sucked from one side to another side along the boundary between the first current collecting member and the second current collecting member, in a space between the hoods.

## Claims

1. A laser welding method comprising:
a preparation step of preparing a first member (61) and a second member (62) to be stacked on the first member (61); and
a welding step (S8) of welding the first member (61) and the second member (62) to each other by irradiating a boundary (BL) between the stacked first member (61) and second member (62) with a laser beam (LS), wherein
the first member (61) and the second member (62) prepared in the preparation step each has an end face (61a, 62a), the end faces (61a, 62a) being adjusted to the same level in height in a state that the first and second members (61, 62) are stacked with each other,
the first member (61) has a stepped face (61b) lower than the end face (61a) of the first member (61) at a position away from the boundary (BL) formed when stacked with the second member (62),
the second member (62) has a stepped face (62b) lower than or higher than the end face (62a) of the second member (62) at a position away from the boundary (BL) formed when stacked with the first member (61), and
in the welding step (S8), the boundary (BL) between the end faces (61a, 62a) of the first member (61) and the second member (62) is irradiated with the laser beam (LS) in a state that hoods (81, 82) are placed on the stepped faces (61b, 62b) of the first member (61) and the second member (62), respectively.

2. The laser welding method according to claim 1, wherein, in the welding step (S8), the boundary (BL) between the first member (61) and the second member (62) is irradiated with the laser beam (LS) while air is sucked from one side to another side along the boundary (BL) between the first member (61) and the second member (62), in a space between the hoods (81, 82).

3. The laser welding method according to claim 1, wherein, in the welding step (S8), the boundary (BL) between the first member (61) and the second member (62) is irradiated with the laser beam (LS) while air is fed and sucked from one side to another side along the boundary (BL) between the first member (61) and the second member (62), in a space between the hoods (81, 82).

4. The laser welding method according to any one of claims 1 to 3, wherein the stepped face (62b) is lower than the end face (62a) in the second member (62).

5. A power storage device manufacturing method comprising:
a step of preparing a case body (10) having an opening (10A) on at least one side thereof;
a step of preparing an electrode assembly (30) having, on at least one side thereof, a current collecting tab (33) attached with a first current collecting member (61);
a step of preparing a sealing plate (20) to be attached to the opening (10A), the sealing plate (20) being assembled with a second current collecting member (62) to be welded with the first current collecting member (61);
a step of accommodating the electrode assembly (30) in the case body (10) such that the first current collecting member (61) is exposed from the opening (10A) of the case body (10); and
a step of welding the first current collecting member (61) and the second current collecting member (62) to each other by irradiating a boundary (BL) between the stacked first current collecting member (61) and the second current collecting member (62) with a laser beam (LS), wherein
the first current collecting member (61) and the second current collecting member (62) each has an end face (61a, 62a), the end faces (61a, 62a) being adjusted to the same level in height in a state that the first and second current collecting members (61, 62) are stacked with each other,
one of the first current collecting member (61) and the second current collecting member (62) has a stepped face (61b, 62b) lower than the end face (61a, 62a) at a position away from the boundary (BL) formed when stacked with the other current collecting member,
the other one of the first current collecting member (61) and the second current collecting member (62) has a stepped face (61b, 62b) lower than or higher than the end face (61a, 62a) at a position away from the boundary (BL) formed when stacked with the one current collecting member, and
in the welding step (S8), the boundary (BL) between the end faces (61a, 62a) of the first current collecting member (61) and the second current collecting member (62) is irradiated with the laser beam (LS) in a state that hoods (81, 82) are placed on the stepped faces (61b, 62b) of the first current collecting member (61) and the second current collecting member (62), respectively.

6. The power storage device manufacturing method according to claim 5, wherein the hood (81) placed on the stepped face (61b) of the first current collecting member (61) is arranged so as to face the opening (10A) of the case body (10), and the hood (82) placed on the stepped face (62b) of the second current collecting member (62) is arranged so as to face the inner side face of the sealing plate (20).

7. The power storage device manufacturing method according to claim 5 or 6, wherein, in the welding step (S8), the boundary (BL) between the first current collecting member (61) and the second current collecting member (62) is irradiated with the laser beam (LS) while air is sucked from one side to another side along the boundary (BL) between the first current collecting member (61) and the second current collecting member (62), in a space between the hoods (81, 82).

8. The power storage device manufacturing method according to claim 5 or 6, wherein, in the welding step (S8), the boundary (BL) between the first current collecting member (61) and the second current collecting member (62) is irradiated with the laser beam (LS) while air is fed and sucked from one side to another side along the boundary (BL) between the first current collecting member (61) and the second current collecting member (62), in a space between the hoods (81, 82).
